(19) Europäisches Patentamt
European Patent Office
Office européen des brevets

(11) **EP 2 026 963 B1**

(12) **FASCICULE DE BREVET EUROPEEN**

(45) Date de publication et mention de la délivrance du brevet:
**27.04.2022 Bulletin 2022/17**

(21) Numéro de dépôt: **07766026.4**

(22) Date de dépôt: **10.05.2007**

(51) Classification Internationale des Brevets (IPC):
**B32B 17/10** $^{(2006.01)}$    **C03C 27/12** $^{(2006.01)}$
**G10K 11/168** $^{(2006.01)}$    **B60R 13/08** $^{(2006.01)}$

(52) Classification Coopérative des Brevets (CPC):
**B60R 13/08; B32B 17/10036; B32B 17/10761**

(86) Numéro de dépôt international:
**PCT/FR2007/051246**

(87) Numéro de publication internationale:
**WO 2007/135317 (29.11.2007 Gazette 2007/48)**

(54) **VITRAGE FEUILLETE ACOUSTIQUE, INTERCALAIRE ACOUSTIQUE ET PROCEDE DE SELECTION DE L'INTERCALAIRE POUR UN AMORTISSEMENT ACOUSTIQUE OPTIMAL**

AKUSTISCHE VERBUNDVERGLASUNG, AKUSTISCHE ZWISCHENSCHICHT UND VERFAHREN ZUR AUSWAHL DER ZWISCHENSCHICHT FÜR EINE OPTIMALE AKUSTISCHE DÄMPFUNG

ACOUSTIC LAMINATED GLAZING, ACOUSTIC INTERLAYER AND METHOD FOR SELECTING THE INTERLAYER FOR OPTIMAL ACOUSTIC DAMPING

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.05.2006 FR 0651849**

(43) Date de publication de la demande:
**25.02.2009 Bulletin 2009/09**

(73) Titulaire: **SAINT-GOBAIN GLASS FRANCE
92400 Courbevoie (FR)**

(72) Inventeurs:
• **BOURE, Jean-Philippe
F-60170 Ribecourt (FR)**
• **CHARLIER, Julien
F-02400 Chateau Thierry (FR)**
• **GAUDRY, Eloi
B-1200 Wolluwe St Lambert (BE)**
• **REHFELD, Marc
F-95460 Ezanville (FR)**

(74) Mandataire: **Saint-Gobain Recherche
Département Propriété Industrielle
39 Quai Lucien Lefranc
93300 Aubervilliers (FR)**

(56) Documents cités:
EP-A1- 0 844 075        EP-A1- 1 281 690
EP-A1- 1 795 343        WO-A1-2006/038332
JP-A- 2000 272 936      US-A- 5 190 826
US-A- 5 796 055         US-A1- 2006 008 658
US-B1- 6 432 522

**EP 2 026 963 B1**

**Description**

L'invention concerne un intercalaire à propriété d'amortissement acoustique pour être incorporé dans un vitrage feuilleté, destiné notamment à des engins de locomotion, en particulier véhicule automobile.

Parmi toutes les qualités concourant au confort dans les moyens de transport modernes comme les trains et les automobiles, le silence est devenu déterminant.

Le confort acoustique a été amélioré depuis plusieurs années maintenant, en traitant les bruits, tels que les bruits du moteur, de roulement ou de suspension, et cela à leur origine ou au cours de leur propagation aérienne ou dans les solides, au moyen par exemple de revêtements absorbants, de pièce de liaison en élastomère.

Les formes des véhicules ont été également modifiées pour améliorer la pénétration dans l'air et diminuer les turbulences qui sont elles-mêmes sources de bruit.

Et depuis quelques années, on s'est penché sur le rôle que pouvaient jouer les vitrages dans l'amélioration du confort acoustique, en particulier des vitrages feuilletés comportant des films intercalaires plastiques. Les vitrages feuilletés présentent en outre d'autres avantages tels que supprimer le risque de projection de fragments en cas de casse brutale, constituer un retardateur d'effraction.

Il a été mis en évidence que l'utilisation de films plastiques standard dans des vitrages feuilletés ne convenait pas dans l'amélioration du confort acoustique. Il a alors été développé des films plastiques spécifiques qui présentaient des propriétés d'amortissement permettant une amélioration du confort acoustique.

Dans la description qui suit, la référence à un film amortissant est relative à un film plastique viscoélastique qui assure un amortissement amélioré des vibrations afin de procurer au vitrage une fonction de réduction des bruits.

Il a été montré que les performances acoustiques d'un vitrage dépendent de la valeur du facteur de perte tan $\delta$ du matériau constituant le film intercalaire. Le facteur de perte est le ratio entre l'énergie dissipée sous forme calorique et l'énergie de déformation élastique ; il caractérise la capacité du matériau à dissiper l'énergie. Plus le facteur de perte est fort, plus l'énergie dissipée est importante, plus le matériau joue donc sa fonction d'amortissement.

Ce facteur de perte varie en fonction de la température et de la fréquence. Pour une fréquence donnée, le facteur de perte atteint sa valeur maximale à une température, dite température de transition vitreuse.

Les matériaux utilisés en tant qu'intercalaires de vitrages feuilletés sont des films plastiques viscoélastiques, de type polymères acryliques ou résines d'acétal par exemple, qui présentent un facteur de perte assez élevé, tel qu'au moins supérieur à 0,6 pour une plage donnée de températures et pour une plage donnée de fréquences.

Pour assurer des propriétés d'amortissement permettant une amélioration du confort acoustique, certains brevets ont exposé la nécessité, outre d'avoir un facteur de perte supérieur à une valeur de seuil, d'éviter une chute brutale de ce facteur de perte à la fréquence de coïncidence (typiquement aux environs de 2000 Hz) propre à la composition du vitrage feuilleté. Afin d'y parvenir, le brevet US 5 190 826 montre l'association d'au moins deux films intercalaires ou la combinaison de deux matériaux pour constituer un film intercalaire, telle que chacun des films ou matériaux est constitué d'une résine d'acétal de polyvinyle distincte mélangée à un plastifiant : cette association de deux sortes spécifiques de résine permettrait d'assurer un amortissement sur une plus large gamme de températures.

Le brevet US 5 796 055 décrit également la combinaison de deux films qui présentent une propriété d'amortissement élevé (facteur de perte tan $\delta$ élevé) sur deux plages distinctes de température de manière à obtenir un vitrage feuilleté qui fournit des performances acoustiques sur une plus large gamme de températures.

Si effectivement, lorsque l'on combine deux films présentant des propriétés d'amortissement amélioré sur deux plages de températures distinctes, l'intercalaire obtenu au final peut fournir au vitrage feuilleté un amortissement important sur une gamme de températures plus étendue que ces dernières prises séparément, cette combinaison en revanche ne conduit pas forcément, d'une part, à un amortissement optimisé sur cette gamme de températures plus étendue, et d'autre part, elle n'est pas invariablement performante.

On aurait pu aisément penser que la combinaison de deux films présentant chacun un amortissement élevé sur deux gammes distinctes de températures conduirait invariablement à l'obtention d'un intercalaire présentant un amortissement au moins aussi important sur chacune des gammes de températures que celui du film présentant l'amortissement le plus important.

Or, les inventeurs ont mis en évidence que l'intercalaire résultant ne présentait pas obligatoirement un amortissement si performant, et que ce dernier pouvait même être proche du film présentant le plus faible amortissement, ce qui ne conduit pas à une propriété d'amortissement amélioré.

Il a en effet été démontré que la combinaison de deux matériaux répondant uniquement à un facteur de perte supérieur à 0,6 pour deux plages distinctes de températures, tel que décrit dans l'art antérieur, ne convenait pas forcément pour obtenir un intercalaire performant sur l'ensemble des deux plages de températures.

On a par exemple considéré un intercalaire constitué de l'association par feuilletage de deux films amortissants : un film de polyvinyle butyral de nom commercial S-Lec Acoustic Film HI-RZN12 de la société SEKISUI d'épaisseur 0,76 mm, ce film présentant un pic de transition vitreuse autour de 10°C à 200 Hz, et un film de polyvinyle butyral de nom commercial Saflex RC41 de la société SOLUTIA d'épaisseur 0,76 mm, ce film présentant un pic de transition vitreuse

autour de 40 °C, à 200 Hz.

On a vérifié que la propriété d'amortissement permettant l'amélioration du confort acoustique procurée par l'intercalaire à un vitrage n'était pas invariablement aussi importante que celle procurée par chacun des films aux deux températures de transition vitreuse respectives pour lesquelles les films sont les plus amortissants, respectivement autour de 10°C et autour de 40°C. A cet effet, les facteurs de perte de l'intercalaire résultant de l'association par feuilletage des deux films ainsi que ceux des films pris séparément ont été mesurés au viscoanalyseur.

Le viscoanalyseur est un appareil qui permet de soumettre un échantillon de matériau à des sollicitations de déformations dans des conditions précises de températures et de fréquences, et ainsi d'obtenir et de traiter l'ensemble des grandeurs rhéologiques caractérisant le matériau. L'exploitation des données brutes des mesures de force et de déplacement, en fonction de la fréquence, à chaque température, permet de tracer des courbes du facteur de perte tan $\delta$ en fonction de la fréquence et pour différentes températures. Le viscoanalyseur de marque METRAVIB ne fournit des valeurs que sur le domaine de fréquence 5 à 400 Hz. Aussi, lorsqu'il est nécessaire de tracer des courbes à des fréquences au-delà de 400 Hz ou à d'autres fréquences que celles auxquelles une mesure a été faite, ou pour des températures autres que celle à laquelle une mesure a été faite, il est utilisé, de manière connue, la loi d'équivalence fréquence/température établie par la méthode WLF (William-Landel-Ferry).

Le facteur de perte tan $\delta$, pour chacun des films et pour la combinaison des deux, a donc été estimé par un viscoanalyseur de marque METRAVIB, pour une fréquence de 200Hz, aux températures 10 et 40°C. Ces valeurs ont été reportées dans le tableau suivant :

| tan $\delta$ | 10°C | 40°C |
|---|---|---|
| SEKISUI S-Lec Acoustic Film HIRZN12 0,76mm | 1,00 | 0,34 |
| SOLUTIA Saflex RC41 0,76mm | 0,14 | 1,01 |
| Intercalaire constituée des deux films | 0,88 | 0,43 |

Considérés seuls, on constate que le film SEKISUI est amortissant à 10°C (1,00) et non à 40°C (0,34), tandis que le film SOLUTIA est amortissant à 40°C (1,01) mais ne l'est pas à 10°C (0,14).

Si à 10°C, le facteur de perte de l'intercalaire constitué des deux films est très élevé (0,88), tout comme celui du film SEKISUI (1,00) qui présente le facteur de perte le plus élevé des deux films pris séparément, en revanche à 40°C, alors que le film SOLUTIA présente un facteur de perte très élevé (1,01), l'intercalaire constitué des deux films présente un facteur de perte beaucoup plus faible (0,43), relativement proche de celui du film SEKISUI à cette même température, et donc non amortissant.

Par conséquent, si deux films peuvent chacun être amortissant à deux températures distinctes, la combinaison des deux n'implique pas forcément l'obtention d'un intercalaire amortissant à chacune des deux températures ; l'effet attendu n'est pas là.

Par ailleurs, cette combinaison qui n'assure pas obligatoirement la performance acoustique souhaitée implique une augmentation de l'épaisseur de l'intercalaire, l'utilisation de deux matières distinctes, et la mise en œuvre du procédé d'obtention de cette combinaison, ce qui ne va pas pour l'ensemble sans une augmentation du coût du produit fini.

Aussi, il peut être préférable de n'utiliser qu'un seul film amortissant, qui certes ne sera opérationnel que sur une plage restreinte de températures, mais assurera néanmoins de très bonnes performances, alors qu'opter pour une pluralité de matériaux ou de films augmentera la quantité de matériau et l'épaisseur de l'intercalaire sans pour autant conduire à une efficacité sur une plus large gamme de températures.

En fait, une augmentation de la quantité des matériaux dans un intercalaire ne se justifierait réellement que si la performance est atteinte sur toutes les gammes de températures pour lesquelles un amortissement est obtenu pour chacun des matériaux.

Par ailleurs, il a été décrit concernant l'intégration d'un intercalaire amortissant dans un vitrage feuilleté, que le facteur de perte tan $\delta$ ne doit pas être considéré seul mais que le module de cisaillement G' constitue une autre caractéristique à prendre en compte dans la propriété amortissante de l'intercalaire. Le brevet EP844075 a mis en évidence que pour amortir les vibrations, en particulier d'origine solidienne (typiquement, les fréquences inférieures à 300 Hz), l'intercalaire du vitrage feuilleté doit répondre à des valeurs particulières quant au module de cisaillement G' et au facteur de perte tan $\delta$. On rappelle que le module de cisaillement G' caractérise la rigidité du matériau ; plus G' est élevé, plus le matériau est raide, et plus G' est faible, plus le matériau est souple. Le module de cisaillement dépend de la température et de la fréquence. Le module de cisaillement G' est également estimé à l'aide d'un viscoanalyseur.

En particulier, le document EP-A-0844075 décrit un vitrage de protection acoustique d'un véhicule, constitué d'un vitrage feuilleté comprenant au moins une feuille de verre et un film intercalaire possédant un facteur de perte tan$\delta$ supérieur à 0,6 et un module de cisaillement G' inférieur à $2.10^7$ N/m$^2$,.dans un domaine de température compris entre 10 et 60°C et dans un domaine de fréquence compris enter 50 et 10 000 Hz. Le document US-A-2006/0008658 décrit un vitrage feuilleté et un intercalaire pour vitrage feuilleté, permettant d'atténuer l'impact guand une tête entre en collision avec le vitrage lors d'un accident de personne. Les valeurs du critère de blessure à la tête (HIC) mesurées selon les règles du comité de sécurité amélioré des véhicules (EECV) doivent être supérieures à 1000.

L'invention a donc pour but de fournir un vitrage feuilleté comportant un intercalaire constitué d'au moins deux films associés ou deux matériaux réunis, constituant chacun un film ou matériau amortissant, de façon que l'intercalaire en résultant soit efficace non seulement sur une large plage de températures mais aussi qu'il présente une performance d'amortissement optimale sur toute cette plage de températures.

Selon l'invention, le vitrage comporte au moins deux feuilles de verre et un intercalaire agencé entre les feuilles de verre, l'intercalaire comprenant au moins deux films amortissants faits de deux matériaux respectifs A et B tels que les deux matériaux présentent sur deux gammes respectives de températures $t_A$ et $t_B$, un facteur de perte tan $\delta$ supérieur à 0,6 et un module de cisaillement G' inférieur à $2.10^7$ Pa, et est caractérisé en ce que l'intercalaire permet une amélioration optimale du confort acoustique procuré par le vitrage sur au moins deux plages distinctes de températures $t_1$ et $t_2$ comprises respectivement dans les deux gammes de températures $t_A$ et $t_B$, et en ce que le film présentant, à la fréquence de 200 Hz et pour chacune des deux plages de températures $t_1$ et $t_2$, le facteur de perte tan $\delta$ le plus élevé présente un

$$G'_{eq} = G' \frac{e_{tot}}{e}$$

module de cisaillement équivalent noté $G'_{eq}$, tel que où G' est le module de cisaillement du matériau constituant le film, e l'épaisseur du film et $e_{tot}$ l'épaisseur totale de l'intercalaire, qui est inférieur au(x) module(s) de cisaillement équivalent(s) du ou des autres films.

On entend par plages distinctes de températures des plages qui s'étendent différemment entre deux valeurs de température, les plages ne se chevauchant pas.

Ainsi, il ne faut pas seulement que chacun des films soit amortissant dans sa plage correspondante de températures (tan $\delta$ supérieur à 0,6) et que le module de cisaillement du matériau soit inférieur à $2.10^7$ Pa, mais il faut que pour le film le plus amorti dans la plage correspondante de températures, ce film ait un module de cisaillement équivalent plus faible que les autres. De cette manière, l'intercalaire présentera un comportement similaire au film le plus amorti sur chaque plage de températures. L'intercalaire assurera ainsi un amortissement optimum sur chacune des plages de températures pour lesquelles chacun des films constituant l'intercalaire joue un rôle amortissant optimal.

Selon une caractéristique, sur la plage de températures $t_3$ séparant les plages $t_1$ et $t_2$ qui ne se chevauchent pas, le rapport entre les modules de cisaillement équivalents des films est compris entre 0,2 et 5 de façon à assurer un confort acoustique optimal également sur cette plage de températures.

De préférence, l'intercalaire du vitrage présente un module de cisaillement G' inférieur à $2.10^7$ Pa et un facteur de perte tan $\delta$ supérieur à 0,6, à la fréquence de 200 Hz et au moins sur les deux plages de températures distinctes $t_1$ et $t_2$, et avantageusement également sur la plage de températures commune $t_3$.

Selon un mode de réalisation, les matériaux sont cœxtrudés pour former l'intercalaire. En variante, ils sont feuilletés.

Un tel type de vitrage peut aussi bien être utilisé dans un engin de locomotion, tel qu'un véhicule automobile, un avion, un bateau, un train, que dans un bâtiment.

L'invention a également trait à un intercalaire plastique viscoélastique en tant que tel qui comporte au moins deux films amortissants faits de deux matériaux respectifs A et B tels que ces matériaux présentent chacun sur une gamme de températures $t_A$, et respectivement $t_B$, un facteur de perte tan $\delta$ supérieur à 0,6 et un module de cisaillement G' inférieur à $2.10^7$ Pa, caractérisé en ce que le film qui présente le facteur de perte tan $\delta$ le plus élevé pour une plage donnée de températures incluse dans la gamme de températures $t_A$ ou $t_B$ et à la fréquence de 200 Hz, présente un

$$G'_{eq} = G' \frac{e_{tot}}{e}$$

module de cisaillement équivalent $G'_{eq}$ tel que où G' est le module de cisaillement du matériau constituant le film, e l'épaisseur du film et $e_{tot}$ l'épaisseur totale de l'intercalaire, qui est inférieur au(x) module(s) de cisaillement équivalent(s) du ou des autres films pour ladite plage de température.

De préférence, sur la plage de températures $t_3$ séparant les deux plages distinctes $t_1$ et $t_2$, le rapport entre les modules de cisaillement équivalents des films est compris entre 0,2 et 5.

Cet intercalaire présente de préférence un module de cisaillement G' inférieur à $2.10^7$ Pa et un facteur de perte tan $\delta$ supérieur à 0,6 sur les deux gammes de températures $t_A$ et $t_B$. Il présente avantageusement une propriété d'amortissement acoustique optimal pour le confort acoustique du produit auquel il est destiné.

Selon une caractéristique, les films sont feuilletés ou l'assemblage des films est obtenu par coextrusion des matériaux.

L'invention est enfin relative à un procédé de sélection d'un intercalaire en vue de son intégration dans un vitrage feuilleté pour assurer au vitrage des propriétés d'amortissement acoustique, l'intercalaire comportant une pluralité de films amortissants faits respectivement de matériaux distincts tels que ces matériaux présentent sur respectivement au moins deux gammes de températures $t_A$ et $t_B$, un facteur de perte tan $\delta$ supérieur à 0,6 et un module de cisaillement G' inférieur à $2.10^7$ Pa, caractérisé en ce qu'on choisit chacun des films tels que sur au moins deux plages distinctes de températures $t_1$ et $t_2$ comprises respectivement dans les deux gammes de températures $t_A$ et $t_B$, et à la fréquence de 200 Hz, le film qui présente le facteur de perte tan $\delta$ le plus élevé pour chaque plage donnée de températures $t_1$ et

$$G'_{eq} = G' \frac{e_{tot}}{e}$$

$t_2$ présente un module de cisaillement équivalent tel que où G' est le module de cisaillement du matériau constituant le film, e l'épaisseur du film et $e_{tot}$ l'épaisseur totale de l'intercalaire, qui est inférieur au(x) module(s) de cisaillement équivalent(s) du ou des autres films pour ladite plage de température.

Selon une caractéristique, sur la plage de températures $t_3$ séparant les deux plages distinctes $t_1$ et $t_2$, le rapport entre les modules de cisaillement équivalents des films est compris entre 0,2 et 5 de sorte que le confort acoustique puisse être optimal sur cette plage de températures.

De préférence, l'intercalaire présente un module de cisaillement G' inférieur à $2.10^7$ Pa et un facteur de perte tan $\delta$ supérieur à 0,6 sur les deux gammes de températures $t_A$ et $t_B$, et en particulier sur les deux plages distinctes $t_1$ et $t_2$ et avantageusement sur la plage de séparation $t_3$.

Selon une autre caractéristique, après sélection des films, les films sont associés pour former un intercalaire qui est intégré dans un vitrage feuilleté, à destination notamment du bâtiment ou d'un engin de locomotion.

D'autres caractéristiques et avantages de l'invention vont à présent être décrits en regard des dessins sur lesquels :

- La figure 1 est une vue partielle en coupe d'un vitrage selon l'invention ;
- La figure 2 est une vue détaillée de la figure 1 ;
- La figure 3 montre les courbes mesurées du facteur de perte tan $\delta$ de chacun des films en fonction de la température et à la fréquence de 200 Hz ;
- La figure 4 montre les courbes mesurées du module de cisaillement de chacun des films en fonction de la température et à la fréquence de 200 Hz ;
- La figure 5 montre les courbes mesurées du module de cisaillement équivalent de chacun des films en fonction de la température et à la fréquence de 200 Hz.

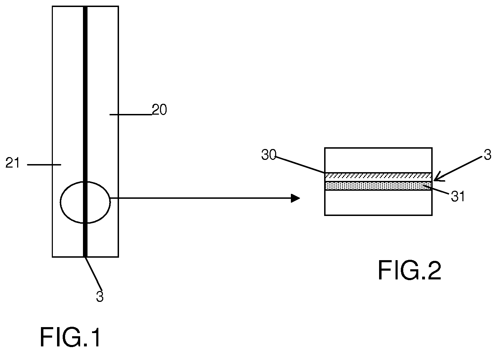

La figure 1 illustre un vitrage feuilleté 2 comportant au moins deux feuilles de verre 20 et 21, et un intercalaire 3 amortissant qui procure au vitrage une propriété d'amortissement améliorant le confort acoustique. Ce vitrage incorporé par exemple dans un véhicule permet de réduire les bruits dus aux vibrations d'origine aérienne et/ou solidienne se transmettant via le vitrage.

La figure 2 qui est une vue détaillée de la figure 1 montre la combinaison de plusieurs films, ici deux films 30 et 31, constituant l'intercalaire 3. Chacun des films d'épaisseur respective $e_A$ et $e_B$ est constitué d'un matériau plastique viscoélastique distinct A et respectivement B.

L'intercalaire a été obtenu par feuilletage des films ou par coextrusion des matériaux.

L'association de l'intercalaire aux feuilles de verre se fait de manière connue par empilement des feuilles de verre et de l'intercalaire et par passage de l'ensemble en autoclave.

A la fréquence de 200 Hz, le matériau A présente un facteur de perte tan $\delta$ supérieur à 0,6 et un module de cisaillement inférieur à $2.10^7$ Pa sur une gamme $t_A$ de températures, tandis que le matériau B présente un facteur de perte tan $\delta$ supérieur à 0,6 et un module de cisaillement inférieur à $2.10^7$ Pa sur une autre gamme $t_B$ de températures, les gammes de températures $t_A$ et $t_B$ pouvant ou non se chevaucher.

Ces deux matériaux sont donc choisis pour leur amortissement (tan $\delta$ > 0,6) et leur souplesse (module de cisaillement G' de chaque matériau inférieur à $2.10^7$ Pa) sur deux gammes de températures $t_A$ et respectivement $t_B$.

Or le pouvoir d'absorption de l'énergie vibratoire de l'intercalaire sera plus ou moins important selon son épaisseur et donc selon l'épaisseur de chacun des films. Les inventeurs ont ainsi mis en évidence que le facteur de perte tan $\delta$ et le module de cisaillement des matériaux ne devaient pas être seuls pris en compte pour assurer nécessairement au vitrage de fournir un confort acoustique, mais que le rapport des modules de cisaillement équivalents entre chaque film sur chacune des gammes de températures devait être pris en compte.

$$G'_{eq} = G' \frac{e_{tot}}{e}$$

On note le module de cisaillement équivalent tel que où G' est le module de cisaillement du matériau constituant le film, e l'épaisseur du film et $e_{tot}$ l'épaisseur totale de l'intercalaire.

Selon l'invention, on considère sur les gammes de températures $t_A$ et $t_B$ au moins deux plages de températures

distinctes $t_1$ et $t_2$ qui sont respectivement comprises dans les gammes de températures $t_A$ et $t_B$, ainsi qu'une plage de températures $t_3$ qui correspond à la plage séparant les deux plages de températures distinctes $t_1$ et $t_2$.

Selon l'invention, il est nécessaire qu'à 200 Hz, le film présentant le facteur de perte tan $\delta$ le plus élevé (le matériau le plus amorti) sur chacune des plages de températures considérées $t_1$ et $t_2$, présente en outre un module de cisaillement équivalent inférieur au(x) module(s) de cisaillement équivalent(s) du ou des autres films constituant l'intercalaire.

Ainsi, le film 30 d'épaisseur $e_A$ qui présente un facteur de perte tan $\delta$ supérieur à celui du film 31 sur la plage $t_1$, présente un module de cisaillement équivalent $G'_{eqA}$ inférieur au module de cisaillement équivalent $G'_{eqB}$ du film 31 d'épaisseur es.

Et le film 31 d'épaisseur es qui présente un facteur de perte tan $\delta$ supérieur à celui du film 30 sur la plage $t_2$, présente un module de cisaillement équivalent $G'_{eqB}$ inférieur au module de cisaillement équivalent $G'_{eqA}$ du film 30 d'épaisseur $e_A$.

Encore selon l'invention, pour la plage de températures de séparation $t_3$, il est nécessaire qu'à 200 Hz, le rapport entre les modules de cisaillement équivalents des films soit compris entre 0,2 et 5.

Ainsi, sur la plage $t_3$, le rapport entre le module de cisaillement équivalent $G'_{eqA}$ du film 30 et le module de cisaillement équivalent $G'_{eqB}$ du film 31 est compris entre 0,2 et 5.

Ces caractéristiques combinées du facteur de perte, du module de cisaillement des matériaux constituant les films et des modules de cisaillement équivalents des films confèrent à l'intercalaire un amortissement acoustique optimal pour le vitrage sur l'ensemble des plages de températures $t_1$, $t_2$ et $t_3$ ; l'intercalaire est acoustique sur chacune des plages de températures.

Les deux exemples ci-après de films considérés 30 et 31 sont respectivement un film fait d'un matériau A, dénommé Vanceva Quiet QC41 de la société SOLUTIA, et un film fait d'un matériau B, Saflex AC1.2 de la société SOLUTIA. Le film 30 est utilisé dans une épaisseur de 1,6 mm et le film 31 dans une épaisseur de 3,3 mm. L'intercalaire est obtenu par feuilletage des films.

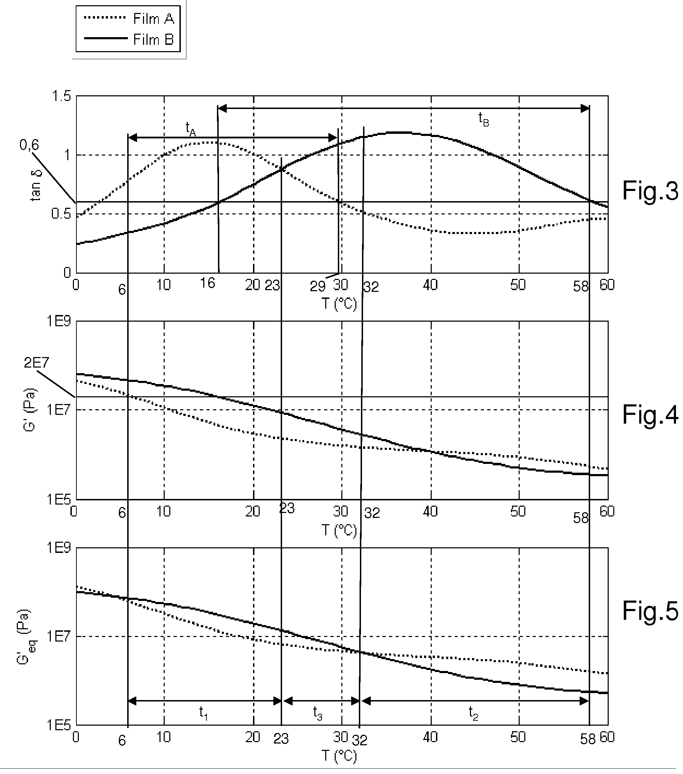

A 200Hz, le film 30 présente un facteur de perte tan $\delta$ supérieur à 0,6 ainsi qu'un module de cisaillement G' inférieur à $2.10^7$ Pa, entre la température de 6°C et la température de 29°C (gamme $t_A$), avec une température de transition vitreuse à 14°C (figures 3 et 4).

A 200Hz, le film 31 présente un facteur de perte tan $\delta$ supérieur à 0,6 ainsi qu'un module de cisaillement G' inférieur à $2.10^7$ Pa, entre la température de 16°C et la température de 58°C (gamme $t_B$), avec une température de transition vitreuse à 38°C (figures 3 et 4).

A noter que tous les résultats de mesure donnés dans le texte ont été obtenus par un viscoanalyseur de marque METRAVIB.

On considère selon l'invention :

- la plage distincte $t_1$ (de 6°C à 23°C) qui est comprise dans la gamme $t_A$ et pour laquelle le film 30 est plus amorti que le film 31 ;
- la plage $t_2$ (de 32°C à 58°C) qui est comprise dans la gamme $t_B$ et pour laquelle le film 31 est plus amorti que le film 30 ;
- la plage $t_3$ (de 23°C à 32°C) qui sépare les plages $t_1$ et $t_2$.

Selon l'invention, afin que sur les plages distinctes $t_1$ et $t_2$, l'intercalaire assure nécessairement un amortissement acoustique, et cela de manière optimale pour le vitrage, le film 30 présente un module de cisaillement équivalent $G'_{eqA}$ sur la plage $t_1$, (de 6°C à 23°C), qui reste inférieur au module de cisaillement équivalent $G'_{eqB}$ du film 31 sur cette même plage, tandis que sur la plage $t_2$, (de 32°C à 58°C), le film 31 présente un module de cisaillement équivalent $G'_{eqB}$ qui reste inférieur au module de cisaillement équivalent $G'_{eqA}$ du film 30. La figure 5 illustre les courbes des modules de cisaillement équivalents des films.

Selon l'invention encore, pour la plage de séparation $t_3$, le rapport entre les modules de cisaillement équivalents de chacun des films 30 et 31 est compris entre 0,2 et 5 de sorte que l'intercalaire assure nécessairement un amortissement acoustique, et cela de manière optimale pour le vitrage. A 25°C par exemple,

$$G'_{eq_A} = 10^7 \text{ Pa et } G'_{eq_B} = 8.10^6 \text{ Pa, soit } \frac{G'_{eq_B}}{G'_{eq_A}} = 0,8.$$

Par conséquent, la performance acoustique de l'intercalaire existe à la fois sur la plage $t_1$, sur la plage $t_2$ et sur la plage $t_3$.

Le facteur de perte de l'intercalaire sur les plages $t_1$, $t_2$ et $t_3$, est supérieur à 0,6. On indique dans le tableau ci-dessous la valeur du facteur de perte tan $\delta$ mesuré de l'intercalaire à 200 Hz et aux températures 10, 20, 30, 40 et 50°C :

| tan $\delta$ | 10°C | 20°C | 30°C | 40°C | 50°C, |
|---|---|---|---|---|---|
| Intercalaire | 0,7 | 0,9 | 0,7 | 0,7 | 0,7 |

En outre, le module de cisaillement G' de l'intercalaire est de préférence inférieur à $2.10^7$ Pa sur ces plages $t_1$ $t_2$, et $t_3$. Ces caractéristiques sur le facteur de perte et le module de cisaillement garantissent la propriété d'amortissement acoustique optimal que confère l'intercalaire au vitrage. On indique dans le tableau ci-dessous la valeur du module de cisaillement G' mesuré de l'intercalaire à 200 Hz et aux températures 10, 20, 30, 40 et 50°C :

| G' (Pa) | 10°C | 20°C | 30°C | 40°C | 50°C |
|---|---|---|---|---|---|
| Intercalaire | $1,9.10^7$ | $5,9.10^6$ | $2,6.10^6$ | $1,3.10^6$ | $6,2.10^5$ |

## Revendications

**1.** Vitrage (2) comportant au moins, deux feuilles de verre (20, 21) et un intercalaire plastique viscoélastique (3) agencé entre les feuilles de verre, l'intercalaire comprenant au moins deux films amortissants (30, 31), un des films amortissants (30) étant fait d'un matériau A et l'autre film amortissant (31) étant fait d'un matériau B, de telle sorte que le matériau A présente, sur une gamme de températures $t_A$, un facteur de perte tan $\delta$ supérieur à 0,6 et un module de cisaillement G' inférieur à $2.10^7$ Pa, et que le matériau B présente, sur une gamme de températures $t_B$, un facteur de perte tan $\delta$ supérieur à 0,6 et un module de cisaillement G' inférieur à $2.10^7$ Pa, **caractérisé en ce que** l'intercalaire permet une amélioration optimale du confort acoustique procuré par le vitrage sur au moins deux plages distinctes de températures $t_1$ et $t_2$, la plage de température $t_1$ étant comprise dans la gamme de température $t_A$ et la plage de température $t_2$ étant comprise dans la gamme de température $t_B$, et **en ce que** le film A présente, à la fréquence de 200 Hz et pour la plage de températures $t_1$, le facteur de perte tan $\delta$ le plus élevé et un module de cisaillement

$$G'_{eq} = G' \frac{e_{tot}}{e}$$

équivalent $G'_{eq}$, tel que où G' est le module de cisaillement du matériau constituant le film, e l'épaisseur du film et $e_{tot}$ l'épaisseur totale de l'intercalaire, qui est inférieur au(x) module(s) de cisaillement équivalent(s) du ou des autres films pour ladite plage de température $t_1$ et **en ce que** le film B présente, à la fréquence de 200 Hz et pour la plage de températures $t_2$, le facteur de perte tan $\delta$ le plus élevé et un module de cisaillement équivalent $G'_{eq}$ qui est inférieur au(x) module(s) de cisaillement équivalent(s) du ou des autres films pour ladite plage de température $t_2$.

**2.** Vitrage selon la revendication 1, **caractérisé en ce que**, sur la plage de températures $t_3$ séparant les deux plages de températures distinctes $t_1$ et $t_2$, le rapport entre les modules de cisaillement équivalents des films A et B est compris entre 0,2 et 5 de sorte que le confort acoustique est optimal sur cette plage de températures.

**3.** Vitrage selon la revendication 1 ou 2, **caractérisé en ce que** le module de cisaillement G' de l'intercalaire est inférieur à $2.10^7$ Pa et le facteur de perte tan $\delta$ de l'intercalaire est supérieur à 0,6 sur au moins les deux plages de températures distinctes $t_1$ et $t_2$.

**4.** Vitrage selon la revendication 2 ou 3, **caractérisé en ce que** le module de cisaillement G' de l'intercalaire est inférieur à $2.10^7$ Pa et le facteur de perte tan $\delta$ de l'intercalaire est supérieur à 0,6 sur la plage de températures $t_3$ séparant les plages distinctes $t_1$ et $t_2$.

**5.** Vitrage selon l'une quelconque des revendications précédentes, **caractérisé en ce que** les films (30, 31) sont feuilletés pour former l'intercalaire.

**6.** Vitrage selon l'une des revendications 1 à 4, **caractérisé en ce que** les films (30, 31) forment l'intercalaire par coextrusion des matériaux.

**7.** Vitrage selon l'une quelconque des revendications précédentes, **caractérisé en ce qu'**il est utilisé dans un engin de locomotion, en particulier véhicule automobile.

**8.** Vitrage selon l'une quelconque des revendications 1 à 6, **caractérisé en ce qu'**il est utilisé dans un bâtiment.

**9.** Intercalaire plastique viscoélastique destiné à être incorporé entre deux feuilles de verre d'un vitrage, comportant au moins deux films amortissants (30, 31), un des films amortissants (30) étant fait d'un matériau A et l'autre film amortissant (31) étant fait d'un matériau B, de telle sorte que le matériau A présente, sur une gamme de températures $t_A$, un facteur de perte tan $\delta$ supérieur à 0,6 et un module de cisaillement G' inférieur à $2.10^7$ Pa, et que le matériau B présente, sur une gamme de températures $t_B$, un facteur de perte tan $\delta$ supérieur à 0,6 et un module de cisaillement G' inférieur à $2.10^7$ Pa, **caractérisé en ce que** le film A présente, pour une plage donnée de températures $t_1$ incluse dans la gamme de températures $t_A$ et à la fréquence de 200 Hz, le facteur de perte tan $\delta$ le plus élevé et un module

$$G'_{eq} = G' \frac{e_{tot}}{e}$$

de cisaillement équivalent $G'_{eq}$ tel que où G' est le module de cisaillement du matériau constituant le film, e l'épaisseur du film et $e_{tot}$ l'épaisseur totale de l'intercalaire, qui est inférieur au(x) module(s) de cisaillement équivalent(s) du ou des autres films pour ladite plage de température $t_1$ et **en ce que** le film B présente, à la fréquence de 200 Hz et pour la plage de températures $t_2$ incluse dans la gamme de températures $t_B$, le facteur de perte tan $\delta$ le plus élevé et un module de cisaillement équivalent $G'_{eq}$ qui est inférieur au(x) module(s) de cisaillement équivalent(s) du ou des autres films pour cette gamme de température $t_2$, les plages de températures $t_1$ et $t_2$ étant distinctes.

**10.** Intercalaire selon la revendication 9, **caractérisé en ce que** sur la plage de températures $t_3$ séparant les deux plages de températures distinctes $t_1$ et $t_2$, le rapport entre les modules de cisaillement équivalents des films A et B est compris entre 0,2 et 5.

**11.** Intercalaire selon la revendication 9 ou 10, **caractérisé en ce qu'**il présente un module de cisaillement G' inférieur à $2.10^7$ Pa et un facteur de perte tan $\delta$ supérieur à 0,6 sur les deux gammes de températures $t_A$ et $t_B$.

**12.** Intercalaire selon l'une quelconque des revendications 9 à 11, **caractérisé en ce que** les films sont feuilletés.

**13.** Intercalaire selon l'une quelconque des revendications 9 à 11, **caractérisé en ce que** l'assemblage des films est obtenu par coextrusion des matériaux.

**14.** Procédé de sélection d'un intercalaire en vue de son intégration dans un vitrage feuilleté pour assurer au vitrage des propriétés d'amortissement acoustique, l'intercalaire comportant au moins deux films amortissants (30, 31) ), un des films amortissants (30) étant fait d'un matériau A et l'autre film amortissant (31) étant fait d'un matériau B, de telle sorte que le matériau A présente, sur une gamme de températures $t_A$, un facteur de perte tan $\delta$ supérieur à 0,6 et un module de cisaillement G' inférieur à $2.10^7$ Pa, et que le matériau B présente, sur une gamme de températures $t_B$, un facteur de perte tan $\delta$ supérieur à 0,6 et un module de cisaillement G' inférieur à $2.10^7$ Pa, **caractérisé en ce qu'**on choisit le film A tel que, sur une plage de températures $t_1$ comprise dans la gamme de températures $t_A$, et à la fréquence de 200 Hz, le film A présente le facteur de perte tan $\delta$ le plus élevé et un module

$$G'_{eq} = G' \frac{e_{tot}}{e}$$

de cisaillement équivalent $G'_{eq}$ tel que où G' est le module de cisaillement du matériau constituant le film, e l'épaisseur du film et $e_{tot}$ l'épaisseur totale de l'intercalaire, qui est inférieur au(x) module(s) de cisaillement équivalent(s) du ou des autres films pour ladite plage de température $t_1$ et on choisit le film B tel que, sur une plage de températures $t_2$ comprise dans la gamme de températures $t_B$, et à la fréquence de 200 Hz, le film B présente le facteur de perte tan $\delta$ le plus élevé et un module de cisaillement équivalent $G'_{eq}$ qui est inférieur au(x) module(s) de cisaillement équivalent(s) du ou des autres films pour ladite plage de température $t_2$.

**15.** Procédé selon la revendication 14, **caractérisé en ce que** sur la plage de températures $t_3$ séparant les deux plages de températures distinctes $t_1$ et $t_2$, le rapport entre les modules de cisaillement équivalents des films A et B est compris entre 0,2 et 5.

**16.** Procédé selon la revendication 14 ou 15, **caractérisé en ce qu'**après sélection des films, les films sont associés pour former un intercalaire qui est intégré dans un vitrage feuilleté.

**17.** Procédé selon la revendication 16 appliqué à un vitrage de bâtiment ou à un engin de locomotion.

**Patentansprüche**

**1.** Verglasung (2), umfassend mindestens zwei Glasscheiben (20, 21) und eine zwischen den Glasscheiben angeordnete viskoelastische Kunststoffzwischenlage (3), wobei die Zwischenlage mindestens zwei Dämpfungsfolien (30, 31) umfasst, wobei eine der Dämpfungsfolien (30) aus einem Material A hergestellt ist und die andere Dämpfungsfolie (31) aus einem Material B hergestellt ist, derart, dass das Material A über einem Temperaturbereich tA einen Verlustfaktor tan $\delta$ größer als 0,6 und ein Schubmodul G' kleiner als $2,10^7$ Pa aufweist und dass das Material B über einem Temperaturbereich $t_B$ einen Verlustfaktor tan $\delta$ größer als 0,6 und ein Schubmodul G' kleiner als $2,10^7$ Pa aufweist, **dadurch gekennzeichnet, dass** die Zwischenlage eine optimale Verbesserung des durch die Verglasung hervorgerufenen Geräuschkomforts über mindestens zwei verschiedenen Temperaturbereichen $t_1$ und $t_2$ ermöglicht, wobei der Temperaturbereich $t_1$ im Temperaturbereich tA enthalten ist und der Temperaturbereich $t_2$ im Temperaturbereich $t_B$ enthalten ist, und dadurch, dass die Folie A bei der Frequenz 200 Hz und für den Temperaturbereich $t_1$ den höchsten Verlustfaktor tan $\delta$ und ein äquivalentes Schubmodul $G'_{eq}$ aufweist, derart, dass

$$G'_{eq} = G' \frac{e_{tot}}{e}$$ ist, wobei

G' das Schubmodul des Materials ist, aus dem die Folie besteht, e die Dicke der Folie ist und $e_{tot}$ die Gesamtdicke der Zwischenlage ist, die kleiner als das (die) äquivalente(n) Schubmodul(e) der anderen Folien für den Temperaturbereich $t_1$ ist, und dass die Folie B bei der Frequenz 200 Hz und für den Temperaturbereich $t_2$ den höchsten Verlustfaktor tan $\delta$ und ein äquivalentes Schubmodul $G'_{eq}$ aufweist, das für den Temperaturbereich $t_2$ kleiner als das (die) Schubmodul(e) der anderen Folien ist.

**2.** Verglasung nach Anspruch 1, **dadurch gekennzeichnet, dass** über dem Temperaturbereich $t_3$, der die zwei verschiedenen Temperaturbereiche $t_1$ und $t_2$ voneinander trennt, das Verhältnis zwischen den äquivalenten Schubmodulen der Folien A und B zwischen 0,2 und 5 liegt, sodass der Geräuschkomfort über diesem Temperaturbereich optimal ist.

**3.** Verglasung nach Anspruch 1 oder 2, **dadurch gekennzeichnet, dass** über mindestens zwei verschiedenen Temperaturbereichen $t_1$ und $t_2$ das Schubmodul G' der Zwischenlage kleiner als $2,10^7$ Pa und der Verlustfaktor tan $\delta$ der Zwischenlage größer als 0,6 ist.

**4.** Verglasung nach Anspruch 2 oder 3, **dadurch gekennzeichnet, dass** über dem Temperaturbereich $t_3$, der die unterschiedlichen Temperaturbereiche $t_1$ und $t_2$ voneinander trennt, das Schubmodul G' der Zwischenlage kleiner als $2,10^7$ Pa und der Verlustfaktor tan $\delta$ der Zwischenlage größer als 0,6 ist.

**5.** Verglasung nach einem der vorstehenden Ansprüche, **dadurch gekennzeichnet, dass** die Folien (30, 31) zum Bilden der Zwischenlage laminiert sind.

**6.** Verglasung nach einem der Ansprüche 1 bis 4, **dadurch gekennzeichnet, dass** die Folien (30, 31) die Zwischenlage durch Koextrusion der Materialien bilden.

**7.** Verglasung nach einem der vorstehenden Ansprüche, **dadurch gekennzeichnet, dass** sie bei einem Fortbewegungsmittel, insbesondere einem Kraftfahrzeug, verwendet wird.

**8.** Verglasung nach einem der Ansprüche 1 bis 6, **dadurch gekennzeichnet, dass** sie bei einem Gebäude verwendet wird.

**9.** Viskoelastische Kunststoffzwischenlage, die dazu bestimmt ist, zwischen zwei Glasscheiben einer Verglasung eingebettet zu werden, umfassend mindestens zwei Dämpfungsfolien (30, 31), wobei eine der Dämpfungsfolien (30) aus einem Material A hergestellt ist und die andere Dämpfungsfolie (31) aus einem Material B hergestellt ist, derart, dass das Material A über einem Temperaturbereich $t_A$ einen Verlustfaktor tan $\delta$ größer als 0,6 und ein Schubmodul G' kleiner als $2,10^7$ Pa aufweist und dass das Material B über einem Temperaturbereich $t_B$ einen Verlustfaktor tan $\delta$ größer als 0,6 und ein Schubmodul G' kleiner als $2,10^7$ Pa aufweist, **dadurch gekennzeichnet, dass** die Folie A in einem gegebenen Temperaturbereich $t_1$, der im Temperaturbereich $t_A$ enthalten ist, und bei der Frequenz 200 Hz den höchsten Verlustfaktor tan $\delta$ und ein äquivalentes Schubmodul $G'_{eq}$ aufweist, derart, dass, $$G'_{eq} = G' \frac{e_{tot}}{e}$$ ist, wobei $G'$ das Schubmodul des Materials ist, aus dem die Folie besteht, e die Dicke der Folie ist und $d_{tot}$ die Gesamtdicke der Zwischenlage ist, die kleiner als das (die) äquivalente(n) Schubmodul(e) der anderen Folien für den Temperaturbereich $t_1$ ist, und dadurch, dass die Folie B bei der Frequenz 200 Hz und für den Temperaturbereich $t_2$, der im Temperaturbereich $t_B$ enthalten ist, den höchsten Verlustfaktor tan $\delta$ und ein äquivalentes Schubmodul $G'_{eq}$ aufweist, das kleiner als das (die) äquivalente(n) Schubmodul(e) der anderen Folien für diesen Temperaturbereich $t_2$ ist, wobei die Temperaturbereiche $t_1$ und $t_2$ sich voneinander unterscheiden.

10. Zwischenlage nach Anspruch 9, **dadurch gekennzeichnet, dass** über dem Temperaturbereich $t_3$, der die zwei verschiedenen Temperaturbereiche $t_1$ und $t_2$ voneinander trennt, das Verhältnis zwischen den äquivalenten Schubmodulen der Folien A und B zwischen 0,2 und 5 liegt.

11. Zwischenlage nach Anspruch 9 oder 10, **dadurch gekennzeichnet, dass** sie über den zwei Temperaturbereichen $t_A$ und $t_B$ ein Schubmodul $G'$ kleiner als $2,10^7$ Pa und einen Verlustfaktor tan $\delta$ größer als 0,6 aufweist.

12. Zwischenlage nach einem der Ansprüche 9 bis 11, **dadurch gekennzeichnet, dass** die Folien laminiert sind.

13. Zwischenlage nach einem der Ansprüche 9 bis 11, **dadurch gekennzeichnet, dass** die Verbindung der Folien durch Koextrusion der Materialien erzielt wird.

14. Verfahren zur Auswahl einer Zwischenlage im Hinblick auf ihre Integration in eine Verbundverglasung, um geräuschdämpfende Eigenschaften der Verglasung sicherzustellen, wobei die Zwischenlage mindestens zwei Dämpfungsfolien (30, 31) aufweist, wobei eine der Dämpfungsfolien (30) aus einem Material A hergestellt ist und die andere Dämpfungsfolie (31) aus einem Material B hergestellt ist, derart, dass das Material A über einem Temperaturbereich $t_A$ einen Verlustfaktor tan $\delta$ größer als 0,6 und ein Schubmodul $G'$ kleiner als $2,10^7$ Pa aufweist und dass das Material B über einem Temperaturbereich $t_B$ einen Verlustfaktor tan $\delta$ größer als 0,6 und ein Schubmodul $G'$ kleiner als $2,10^7$ Pa aufweist, **dadurch gekennzeichnet, dass** die Folie A derart gewählt wird, dass sie in einem Temperaturbereich $t_1$, der im Temperaturbereich $t_A$ enthalten ist, und bei der Frequenz 200 Hz den höchsten Verlustfaktor tan $\delta$ und ein äquivalentes Schubmodul $G'_{eq}$ aufweist, derart, dass $$G'_{eq} = G' \frac{e_{tot}}{e}$$ ist, wobei $G'$ das Schubmodul des Materials ist, aus dem die Folie besteht, e die Dicke der Folie ist und $e_{tot}$ die Gesamtdicke der Zwischenlage ist, die kleiner als das (die) äquivalente(n) Schubmodul(e) der anderen Folien für den Temperaturbereich $t_1$ ist, und die Folie B derart gewählt wird, dass sie in einem Temperaturbereich $t_2$, der im Temperaturbereich $t_B$ enthalten ist, und bei der Frequenz 200 Hz den höchsten Verlustfaktor tan $\delta$ und ein äquivalentes Schubmodul $G'_{eq}$ aufweist, das kleiner als das (die) äquivalente(n) Schubmodul(e) der anderen Folien für den Temperaturbereich $t_2$ ist.

15. Verfahren nach Anspruch 14, **dadurch gekennzeichnet, dass** über dem Temperaturbereich $t_3$, der die zwei verschiedenen Temperaturbereiche $t_1$ und $t_2$ voneinander trennt, das Verhältnis zwischen den äquivalenten Schubmodulen der Folien A und B zwischen 0,2 und 5 liegt.

16. Verfahren nach Anspruch 14 oder 15, **dadurch gekennzeichnet, dass** nach Auswahl der Folien die Folien verbunden werden, um eine Zwischenlage zu bilden, die in ein Verbundglas integriert wird.

17. Verfahren nach Anspruch 16, das auf eine Verglasung für Gebäude oder ein Fortbewegungsmittel angewendet wird.

**Claims**

1. Glazing (2) comprising at least two glass sheets (20, 21) and a viscoelastic plastic interlayer (3) arranged between the glass sheets, the interlayer comprising at least two damping films (30, 31), one of the damping films (30) being made of a material A and the other damping film (31) being made of a material B, so that the material A has, over a temperature range $t_A$, a loss factor $\tan\delta$ greater than 0.6 and a shear modulus G' less than $2\times10^7$ Pa, and that the material B has, over a temperature range $t_B$, a loss factor $\tan\delta$ greater than 0.6 and a shear modulus G' less than $2\times10^7$ Pa, **characterized in that** the interlayer provides an optimal improvement to the acoustic comfort obtained by the glazing over at least two distinct temperature ranges $t_1$ and $t_2$, the temperature range $t_1$ being included within the temperature range $t_A$ and the temperature range $t_2$ being included within the temperature range $t_B$, and **in that** the film A has, at a frequency of 200 Hz and for the temperature range $t_1$, the highest loss factor $\tan\delta$

$$G'_{eq} = G'\frac{e_{tot}}{e}$$

and an equivalent shear modulus G'$_{eq}$, such that    where G' is the shear modulus of the material constituting the film, e is the thickness of the film and $e_{tot}$ the total thickness of the interlayer, which is less than the equivalent shear modulus or moduli of the other film or films for said temperature range $t_1$ and **in that** the film B has, at a frequency of 200 Hz and for the temperature range $t_2$, the highest loss factor $\tan\delta$ and an equivalent shear modulus G'$_{eq}$ which is less than the equivalent shear modulus or moduli of the other film or films for said temperature range $t_2$.

2.  Glazing according to Claim 1, **characterized in that**, over the temperature range $t_3$ separating the two distinct ranges $t_1$ and $t_2$, the ratio between the equivalent shear moduli of the films A and B lies between 0.2 and 5 so that the acoustic comfort is optimal over this temperature range.

3.  Glazing according to Claim 1 or 2, **characterized in that** the shear modulus G' of the interlayer is less than $2\times10^7$ Pa and the loss factor $\tan\delta$ of the interlayer is greater than 0.6 over at least the two distinct temperature ranges $t_1$ and $t_2$.

4.  Glazing according to Claim 2 or 3, **characterized in that** the shear modulus G' of the interlayer is less than $2\times10^7$ Pa and the loss factor $\tan\delta$ of the interlayer is greater than 0.6 over the temperature range $t_3$ separating the distinct ranges $t_1$ et $t_2$.

5.  Glazing according to any one of the preceding claims, **characterized in that** the films (30, 31) are laminated so as to form the interlayer.

6.  Glazing according to one of Claims 1 to 4, **characterized in that** the films (30, 31) form the interlayer by coextrusion of the materials.

7.  Glazing according to any one of the preceding claims, **characterized in that** it is used in a vehicle, in particular a motor vehicle.

8.  Glazing according to any one of Claims 1 to 6, **characterized in that** it is used in a building.

9.  Viscoelastic plastic interlayer intended to be incorporated between two glass sheets of a glazing panel, comprising at least two damping films (30, 31), one of the damping films (30) being made of a material A and the other damping film (31) being made of a material B, so that the material A has, over a temperature range $t_A$, a loss factor $\tan\delta$ greater than 0.6 and a shear modulus G' less than $2\times10^7$ Pa, and that the material B has, over a temperature range $t_B$, a loss factor $\tan\delta$ greater than 0.6 and a shear modulus G' less than $2\times10^7$ Pa, **characterized in that** the film A has, for a temperature range $t_1$ included within the temperature range $t_A$ and at the frequency of 200 Hz, the

$$G'_{eq} = G'\frac{e_{tot}}{e}$$

highest loss factor $\tan\delta$ and an equivalent shear modulus G'$_{eq}$, such that    where G' is the shear modulus of the material constituting the film, e is the thickness of the film and $e_{tot}$ the total thickness of the interlayer, which is less than the equivalent shear modulus or moduli of the other film or films for said temperature range $t_1$ and **in that** the film B has, at a frequency of 200 Hz and for the temperature range $t_2$ included in the temperature range $t_B$, the highest loss factor $\tan\delta$ and an equivalent shear modulus G'$_{eq}$ which is less than the equivalent shear modulus or moduli of the other film or films for said temperature range $t_2$, the temperature ranges $t_1$ and $t_2$ being distinct.

10. Interlayer according to Claim 9, **characterized in that**, over the temperature range $t_3$ separating the two distinct ranges $t_1$ and $t_2$, the ratio between the equivalent shear moduli of the films A and B lies between 0.2 and 5.

**11.** Interlayer according to Claim 9 or 10, **characterized in that** it has a shear modulus G' less than $2 \times 10^7$ Pa and a loss factor $\tan\delta$ greater than 0.6 over the two temperature ranges $t_A$ and $t_B$.

**12.** Interlayer according to any one of Claims 9 to 11, **characterized in that** the films are laminated.

**13.** Interlayer according to any one of Claims 9 to 11, **characterized in that** the films are assembled by coextruding the materials.

**14.** Method for selecting an interlayer with a view to incorporating it into a laminated glazing panel to provide the glazing panel with acoustic damping properties, the interlayer comprising at least two damping films (30, 31), one of the damping films (30) being made of a material A and the other damping film (31) being made of a material B, so that the material A has, over a temperature range $t_A$, a loss factor $\tan\delta$ greater than 0.6 and a shear modulus G' less than $2 \times 10^7$ Pa, and that the material B has, over a temperature range $t_B$, a loss factor $\tan\delta$ greater than 0.6 and a shear modulus G' less than $2 \times 10^7$ Pa, **characterized in that** the film A is chosen such that, for a temperature range $t_1$ included within the temperature range $t_A$ and at the frequency of 200 Hz, the film A has the highest loss factor

$$G'_{eq} = G' \frac{e_{tot}}{e}$$

$\tan\delta$ and an equivalent shear modulus $G'_{eq}$, such that where G' is the shear modulus of the material constituting the film, e is the thickness of the film and $e_{tot}$ the total thickness of the interlayer, which is less than the equivalent shear modulus or moduli of the other film or films for said temperature range $t_1$ and **in that** the film B is chosen such that, at a frequency of 200 Hz and for the temperature range $t_2$ included in the temperature range $t_B$, the film B has the highest loss factor $\tan\delta$ and an equivalent shear modulus $G'_{eq}$ which is less than the equivalent shear modulus or moduli of the other film or films for said temperature range $t_2$.

**15.** Method according to Claim 14, **characterized in that**, over the temperature range $t_3$ separating the two distinct ranges $t_1$ and $t_2$, the ratio between the equivalent shear moduli of the films lies between 0.2 and 5.

**16.** Method according to Claim 14 or 15, **characterized in that** after selecting the films, the films are brought together to form an interlayer that is incorporated in a laminated glazing panel.

**17.** Method according to Claim 16 applied to a glazing panel of a building or to a vehicle.

20

21

3

FIG.1

30

3

31

FIG.2

Fig.3

Fig.4

Fig.5

**EP 2 026 963 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5190826 A
- US 5796055 A
- EP 844075 A
- EP 0844075 A
- US 20060008658 A